# EUROPEAN PATENT SPECIFICATION

(11) **EP 1 770 508 B1**
(45) Date of publication and mention of the grant of the patent: **14.07.2010**
(21) Application number: 06254917.5
(22) Date of filing: 22.09.2006
(51) Int. Cl.: G06F 9/40

(54) **Blade-based distributed computing system**
Blade-basiertes verteiltes Rechnersystem
Système informatique distribué basé sur des lames

(30) Priority: 23.09.2005 US 720152 P; 09.12.2005 US 748839 P; 09.12.2005 US 748840 P; 21.09.2006 US 524678
(43) Date of publication of application: 04.04.2007
(73) Proprietor: Avid Technology, Inc., Tewksbury, MA 01876 (US)
(72) Inventor: Dey, Jayanta K., Cambridge, MA 02139 (US); Surka, George, Southborough, MA 10772 (US); Snaman, William E. Jr., Nashua, NH 03060 (US); Sharma, Bharat, North Andover, MA 01845 (US); Mydral, Gregory, Bedford, New Hampshire 03110 (US); Lennox, Craig, Arlington, Massachusetts 02476 (US)
(74) Representative: Garratt, Peter Douglas

(56) References cited:
- EP-A- 1 460 819
- US-A1- 2005 091 387

## Description

Distributed computing architectures enable large computational and data storage and retrieval operations to be performed by a number of different computers, thus reducing the time required to perform these operations. Distributed computing architectures are used for applications where the operations to be performed are complex, or where a large number of users are performing a large number of transactions using shared resources.

To reduce the costs of implementation and maintenance of distributed systems, low cost server devices commonly called blades are packaged together in a chassis to provide what is commonly called a blade server. Costs are reduced by minimizing the space occupied by the devices and by having the devices share power and other devices. Each blade is designed to be a low-cost, field replaceable component.

It would be desirable to implement a distributed computing architecture using blade servers that are highly available and scalable, particular for shared storage of high bandwidth real-time media data that is shared by a large number of users. However, providing high availability in a system with low-cost field replaceable components presents challenges.

US 2005/091387 relates to a computer network system including a user network, server units and a server unit management network, in which a network switch is provided for logically isolating the user network and the server unit management network from each other. IP addresses are assigned to the server units using Dynamic Host Configuration Protocol (DHCP) by a DHCP server or a PXE (pre-boot execution environment) server, to which the server units connect via the network switch. The server units and network switch can be provided as blades of a blade server.

The present invention is set forth in the appended claims.

Some of the arrangements disclosed hereafter have some of the following features.

A blade-based distributed computing system, for applications such as a storage network system, is made highly-available. The blade server integrates several computing blades and a blade for a switch that connects to the computing blades. Redundant components permit failover of operations from one component to its redundant component.

Configuration of one or more blade servers, such as assignment of high level network addresses to each blade, can be performed by a centralized process, called a configuration manager, on one blade in the system. High level network addresses can be assigned using a set of sequential network addresses for each blade server. A range of high level network addresses is assigned to each blade server. Each blade server in turn assigns high level network addresses to its blades. The high level network address for each blade can be mapped to its chassis identifier and slot identifier. Configuration information also may include software version information and software upgrades. By distributing configuration information among the various components of one or more blade servers, configuration information can be accessed by any component that acts as the configuration manager.

Each blade server also may monitor its own blades to determine whether they are operational, to communicate status information and/or initiate recovery operations. With status and configuration information available for each blade, and a mapping of network addresses for each blade to its physical position (chassis identifier and slot identifier), this information may be presented in a graphical user interface. Such an interface may include a graphical representation of the blade servers which a user manipulates to view various information about each blade server and about each blade.

An application of such a blade-based system is for shared storage for high bandwidth real-time media data accessed by various client applications. In such an application, data may be divided into segments and distributed among storage blades according to a non-uniform pattern.

In such a system, it may be desirable to manage the quality of service between client applications and the blade servers. The switch in each blade server allocates sufficient bandwidth for a port for a client according to the bandwidth required by the client. The client may indicate its bandwidth requirements to the storage system by informing the catalog manager. The catalog manager can inform the switches of the bandwidth requirements of the different clients. A client may periodically update its bandwidth requirements.

Exemplary distributed computing systems will now be described with reference to the accompanying drawings: in which:
**Fig. 1** is a block diagram of an example distributed computing system.
**Fig. 2** is a block diagram of an example blade server with blades interconnected by a switch.
**Fig. 3** is a block diagram of an example blade server with redundant switches and networks.
**Fig. 4** is a flow chart describing how the system may be configured.
**Fig. 5** is a flow chart describing how status of the system may be monitored.
**Fig. 6** is a flow chart describing how the system may recover when a computing unit blade fails.
**Fig. 7** is a flow chart describing how the system may recover when a switch blade fails.
**Fig. 8** is a flow chart describing how the system may recover when a switch blade is added.
**Fig. 9** is a flow chart describing how software may be upgraded in the system.

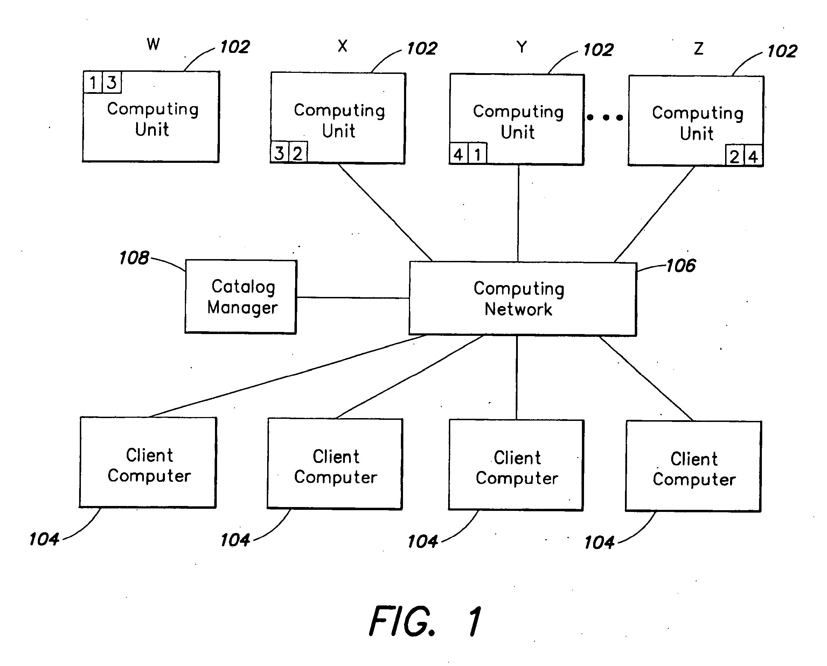

**Fig.** 1 illustrates an example distributed computer system **100.** The computer system **100** includes a plurality of computing units **102.** There may be an arbitrary number of computing units **102** in the computer system **100.** The computing units **100** are interconnected through a computer network **106** which also interconnects them with a plurality of client computers **104.**

Each computing unit **102** is a device with a nonvolatile computer-readable medium, such as a disk, on which data may be stored. The computing unit also has faster, typically volatile, memory into which data is read from the nonvolative computer-readable medium. Each computing unit also has its own processing unit that is independent of the processing units of the other computing units, which may execute its own operating system, such as an embedded operating system, e.g., Windows XP Embedded, Linux and VxWorks operating systems, and application programs. For example, the computing unit may be implemented as a server computer that responds to requests for access, including but not limited to read and write access, to data stored on its nonvolatile computer-readable medium in one or more data files in the file system of its operating system. A computing unit may perform other operations in addition to data storage and retrieval, such as a variety of data processing operations.

Client computers **104** also are computer systems that communicate with the computing units **102** over the computer network **106.** Each client computer may be implemented using a general purpose computer that has its own nonvolatile storage and temporary storage, and its own processor for executing an operating system and application programs. Each client computer **104** may be executing a different set of application programs and/or operating systems.

An example application of the system shown in **Fig. 1** for use as a distributed, shared file system for high bandwidth media data will now be described. Such an application is described in more detail in U.S. Patent 6,785,768. The computing units **102** may act as servers that deliver data to or receive data from the client computers **104** over the computer network **106.** Client computers **104** may include systems which capture data received from a digital or analog source for storing the data on the storage units **102.** Client computers **104** also may include systems which read data from the storage units, such as systems for authoring, processing or playback of multimedia programs, including, but not limited to, audio and video editing. Other client computers **104** may perform a variety of fault recovery tasks. For a distributed file system, one or more client computers may be used to implement one or more catalog managers **108.** A catalog manager is a database, accessible by the client computers **104,** that maintains information about the data available on the computing units **102.** This embodiment may be used to implement a broadcast news system such as shown in PCT Publication WO97/39411, dated Oct. 23, 1997.

The latency between a request to transfer data, and the actual transmission of that request by the network interface of one of the units in such a system can be reduced using techniques described in U.S. Patent Application No. US2007/0136484 entitled "Transmit Request Management in a Distributed Shared Storage System", by Mitch Kuninsky, filed on 21 September 2006, based upon U.S. Provisional Patent Application Ser. No. 60/748,838.

In one embodiment of such a distributed, shared file system the data of each file is divided into segments. Redundancy information for each segment is determined, such as a copy of the segment. Each segment and its redundancy information are stored on the storage of different computing units. The selection of a computing unit on which a segment, and its redundancy information, is stored according to any sequence of the computing units that provides a non-sequential distribution if the pattern of distribution is different from one file to the next and from the file to its redundancy information. For example, this sequence may be random, pseudorandom, quasi-random or a form of deterministic sequence, such as a permutation. An example distribution of copies of segments of data is shown in **Fig. 1**. In **Fig. 1**, four computing units **102**, labeled w, x, y and z, store data which is divided into four segments labeled 1, 2, 3 and 4. An example distribution of the segments and their copies is shown, where: segments 1 and 3 are stored on computing unit w; segments 3 and 2 are stored on computing unit x; segments 4 and 1 are stored on computing unit y; and segments 2 and 4 are stored on computing unit z. More details about the implementation of such a distributed file system are described in U.S. Patent 6,785,768.

The computing units **102** and computer network **106** shown in **Fig. 1** may be implemented using one or more blade servers. A blade server is a server architecture that houses multiple server modules (called blades) in a single chassis. Thus each computing unit is implemented using a blade. The chassis provides multiple redundant power supplies and networking switches, and each blade has its own CPU, memory, hard disk and network interface and executes its own operating system (including a file system) and application programs. The blade server also includes at least one network switch on one of its blades to which other blades are connected and to which one or more client computers may connect. The switch can be configured and monitored by the CPU of the switch blade.

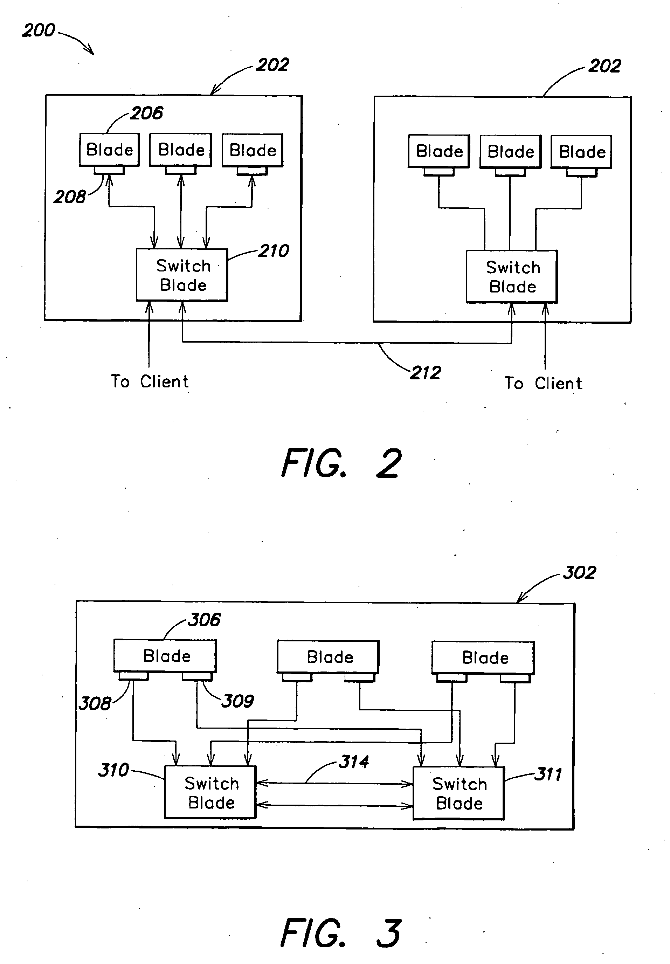

Referring now to **Fig. 2****,** a server system **200,** implemented using one or more blade servers, will now be described. The server system **200** includes one or more blade servers **202,** with each blade server comprising a chassis (not shown) housing a set of blades **206.** Each blade **206** has a processor, storage and a network interface **208** with a network address. At least one slot in the chassis is reserved for a blade that acts as a switch, called a switch blade **210.** In one implementation a blade includes a conventional processor, such as an Intel Xeon processor, and an operating system, such as the Windows XP Embedded operating system, and disk based storage. The chassis includes redundant power supplies (not shown) for all of the blades and at least one switch blade **210.** The switch blade may be redundant. Each blade is connected, through its network interface, to the switch blade **210** in the chassis. If a redundant switch blade is provided, each blade also may be connected to the redundant switch blade using redundant networking. Clients connect to the blade server either directly through the switch blades **210** or indirectly through other network infrastructures and other network-connected devices. Blade servers **202** may connect to each other by having a network **212** connected between their respective switches. The switches may be configured so as to act as one large switch when interconnected.

**Fig. 3** illustrates a blade server **302** with redundant components. The blade server comprises a chassis (not shown) housing a set of blades **306.** Each blade **306** has a processor and storage, and a first network interface **308** with a first network address and a second network interface **309** with a second network address. The chassis includes a redundant power supplies (not shown) for all of the blades and redundant switch blades **310** and **311**. Each blade is connected through its first network interface **308** to the switch **310** and through its second network interface **309** to the switch blade **311.** The redundant networking provides higher availability of the system by permitting fail over from a failed component to a backup component, as described in more detail below. The redundant switch blades may be interconnected by a redundant serial link **314** or Ethernet links.

Each chassis has a unique identifier among the chassis in the server system. This chassis identifier can be a permanent identifier that is assigned when the chassis is manufactured. Within the chassis, each physical position within the chassis is associated with a chassis position, called a slot identifier. This chassis position may be defined, for example, by hardwiring signals for each slot in the chassis which are received by the blade which it is installed in the chassis. Thus, each blade can be uniquely identified by its slot identifier and the chassis identifier.

Because a blade typically does not have a display or keyboard, communication of information about the status of the blade is typically is done through the network. However, if a blade is not functioning properly, communication from the blade may not occur. Even if communication did occur, it is difficult to determine, using conventional network address assignment protocols, such as Dynamic Host Configuration Protocol (DHCP), to determine the physical location of a blade given only its network address. In that case, the only way to find a blade is through its physical coordinates, which is a combination of the location of the chassis housing the blade (relative to other chassis in the same system) and the slot identifier for the blade in that chassis. Finding the location of a blade also is important during system development, system installation, service integration and other activities. Both switch blades and compute blades have unique slot identifiers within the chassis.

Accordingly, the network is preferably configured in a manner such that the slot identifier and chassis identifier for a blade (whether for a computing unit or a switch) can be determined from its network address. Such a configuration can be implemented such that all blades within a chassis are assigned addresses within a range of addresses that does not overlap with the range of addresses assigned to blades in other chassis. These network addresses may be sequential and assigned sequentially according to slot identifier. To provide high availability and automatic configurability, this configuration preferably is implemented automatically upon startup, reboot, replacement, addition or upgrade of a chassis or blade within a chassis. A table is maintained that tracks, for each pair of slot identifier and chassis identifier, the corresponding configuration information including the network address (typically an IP address) of the device, and optionally other information such as the time the device was configured, services available on the device, etc. A separate table associates the chassis position (relative to other chassis) and the chassis identifier. It is possible to create this association either manually or automatically, for example by integrating location tracking mechanisms such as a global positioning system (GPS) into the chassis. This configuration information may be stored in a blade in nonvolatile memory so as to survive a loss of power to the blade. The configuration information may be stored in each blade to permit any blade to act as a configuration manager, or to permit any configuration manager to access configuration information.

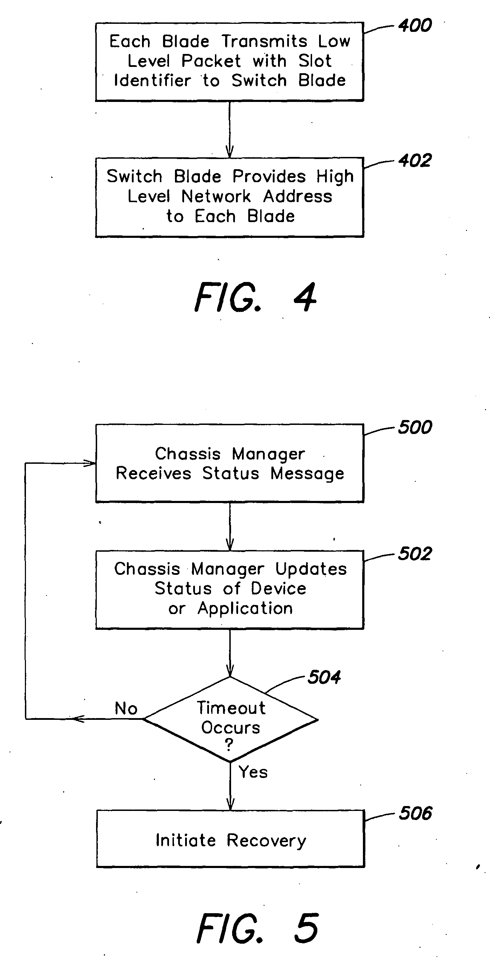

Referring now to **Fig. 4****,** how such a configuration is performed will now be described. Configuration of a device can occur after a device is booted so as to install its firmware and operating system and relevant applications. The server blade devices then begin to transmit (**400**) network packets (for example, Ethernet layer packets) including its slot identifier to two fixed low level network addresses (such as MAC addresses), which are trapped by the two switch blades. The switch may be programmed so that these messages do not cross over into other connected chassis. One of the switch blades responds by providing (**402**) a high level network address (such as an IP address) to the blade. The high level network address is based on the slot identifier, and is obtained from a block of network addresses allocated for that chassis. Preferably, each blade is assigned a network address sequentially, according to its slot identifier. The blade then sets its high level (e.g., IP) network address to the address specified by the switch blade CPU.

To initiate configuration of a multi-chassis installation, a user picks any one of the chassis and provides configuration information for the entire installation, including network address blocks, time, etc., to one of the switch blades. This selected switch blade then passes the configuration information to the configuration manager, a process executed on one of the switch blades. One of the switch blades is selected as a configuration manager. Any reasonable technique can be used to select a device as a configuration manager. For example, upon startup each switch blades may transmit low level network messages, including its chassis identifier, to other switch blades in the system. A switch with the lowest chassis identifier could be selected as the configuration manager. If the blade that is running the configuration manager is removed (which is possible because it is a field replaceable unit), another switch blade takes over the responsibility of the configuration manager. This is accomplished by having the configuration manager periodically send a message to the switch blades of other chassis indicating that it is operational. In one embodiment, the configuration manager may be defined manually through external user input. When the other switch blades determine that the configuration manager is not operational, another switch blade takes over the operation of the configuration manager.

The configuration manager may receive the chassis identifier of every chassis in the system from the switch blades in that chassis. Every switch blade may communicate to each other via a form of unicast or multicast protocol. The configuration manager may then order the chassis identifiers into a table, and assign each chassis a range of network addresses from the larger address block. This information may then be sent back to every switch blade in each chassis. The switch blade of a chassis receives the range of network addresses assigned to the chassis and assigns a network address to each of the blades in the chassis. The configuration manager ensures that each switch blade, and optionally each blade in each chassis, maintains a copy of the configuration information for the system.

Each chassis also may have a chassis manager that is an application that monitors the status of the blades and the applications running on the blades. There is a chassis manager in every chassis, but only one configuration manager in the entire installation.

Both of these functions reside on the CPU within a switch blade. A process executed by the chassis manager will now be described in connection with **Fig. 5****.** Each application and device being monitored periodically sends a status message to the chassis manager.

These status messages are received (**500**) by the chassis manager. The chassis manager maintains information about the status of each device, such as the time at which the last status message was received, and updates (**502**) this status as messages are received. Each device or application that is being monitored is expected to send a status message periodically. If the expected time for receiving a status message passes without a status message being received, i.e., a timeout occurs (**504**), recovery procedures for the device or application are initiated (**506**).

The type and complexity of the recovery procedure depends on the device or application being monitored. For example, if an application is not responding, the chassis manager may instruct the operating system for the blade that is executing that application to terminate that application's process and restart it. An operating system that has failed may cause the blade to be restarted. If a device with a corresponding redundant device has failed, the redundant device could be started. If failure of a hardware device is detected, a system administrator application could be notified of the failure.

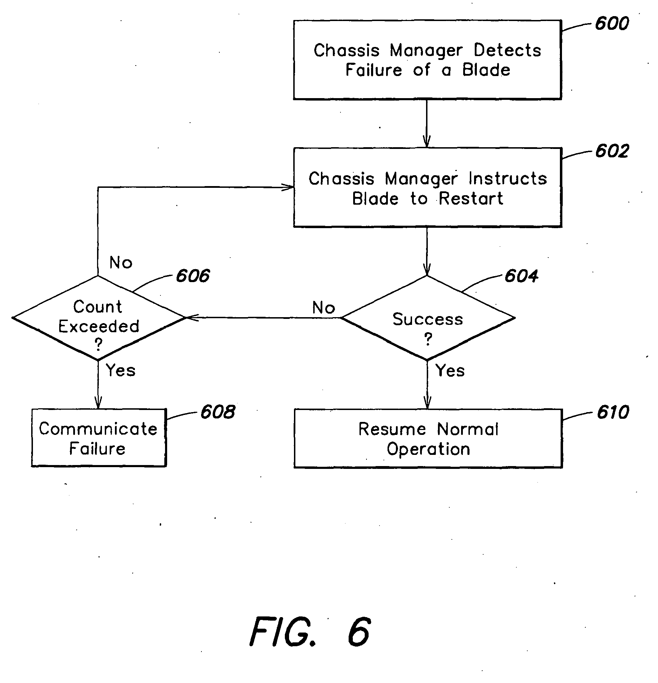

As a particular example of the operation of the chassis manager, **Fig. 6** is a flow chart describing how the system may recover when a computing unit fails. First, the chassis manager, by monitoring the status messages, detects (**600**) whether the computing unit blade has failed. Upon detection of such a failure, the chassis manager instructs (**602**) the computing unit blade (or relevant application on it) to restart. If the restart is not successful, as determined at (**604**), and if the number of restart attempts has not reached a limit (e.g., three), as determined at (**606**), then another attempt is made (**602**). After several unsuccessful attempts are made, a failure condition of the computing unit is communicated (**608**). If the restart is successful, then the chassis manager resumes (**610**) normal operation.

If a computing unit blade fails and needs to be replaced, when a new computing element is added it is configured within the chassis. When a computing blade unit is added, it is configured so that its network address is the same as the unit it replaced. The process for it receiving the network address is described above. With the computing blade restarted, its relevant applications and device can initiate sending status messages to the chassis manager on the switch blade.

Operations for managing failure and replacement of switch blades will now be described. The potential risk of a catastrophic failure of the server operation due to failure of a switch blade in a blade server is reduced by providing redundant switch blades. Using redundant switch blades ensures network connectivity to each computing blade server and service continuity in spite of a switch blade failure. During normal operation, one of the switch blades is designated as the active chassis manager, whereas the other is designated as a passive chassis manager. Both switch blades still perform as switches, but only one of them is the active chassis manager. The switches in a chassis are connected via redundant, serial or Ethernet control paths, to monitor activity of each other, as well as exchange installation configuration information with each other. One of the switches in the blade server assumes the role of the active switch, for example, if it has the most current configuration data, or if it has a lower slot identifier. When a switch blade is replaced, the new switch typically does not have the most current configuration data. In that case, it receives the configuration data from the chassis manager, as well as other switch blades that comprise the redundant switch network.

During normal operation, the chassis manager executes on one switch blade CPU and monitors status messages from the passive chassis manager on the other switch blade. If failure of a passive chassis manager is detected, the active chassis manager attempts to restart the switch blade or can communicate its failure condition.

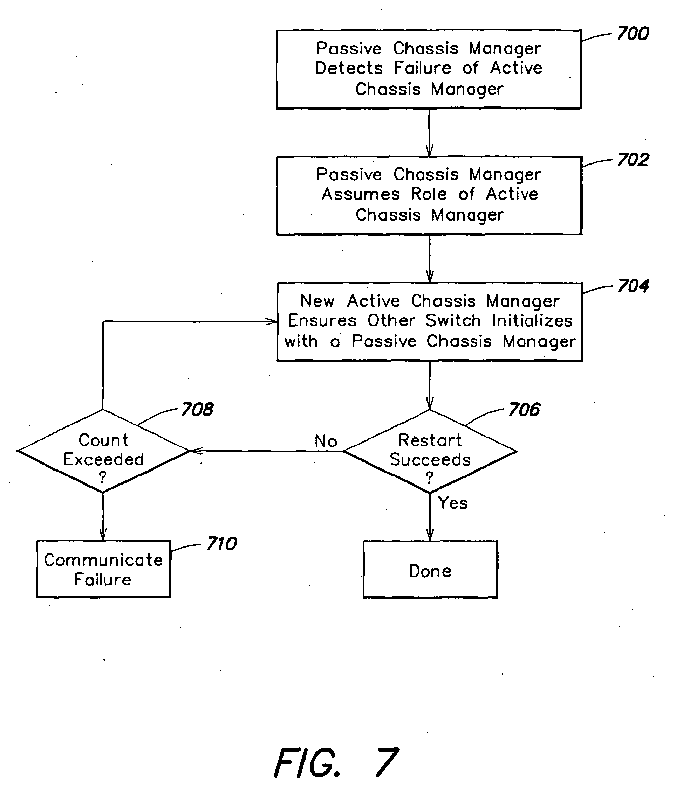

Also during normal operation, the passive chassis manager monitors status messages from the switch blade with the active chassis manager. **Fig. 7** is a flow chart describing how the system may recover when a switch blade with an active chassis manager fails. The passive chassis manager detects (**700**) a failure of the active chassis manager when a status message is not received in a designated period of time. The redundant serial link connection between the two switch blades is intended to reduce the likelihood that the detected failure is due to a link failure. The passive chassis manager then assumes (**702**) the role as the active chassis manager. The new active chassis manager also ensures that the restarted switch or the replacement switch starts a chassis manager service in a passive mode (**704**). If the restart is successful, as determined at (**706**), then the failover is complete. Otherwise, a few attempts at restarting the original active switch are made, until a threshold is reached as determined at (**708**). If the restart is not successful, the failure condition of the switch is communicated (**710**), leading to replacement of the switch blade.

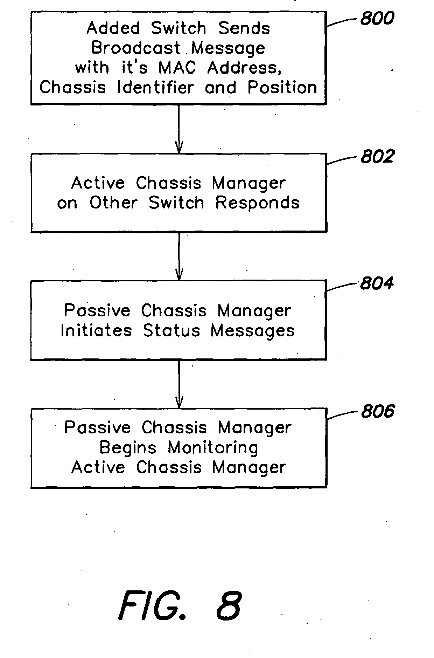

**Fig. 8** is a flow chart describing how the system recovers when a switch blade is added. If a switch blade is being added, the chassis manager on the other switch blade in the blade server is currently in an active state. Therefore, the added switch blade will start up its chassis manager service in a passive state. The added switch, after booting, sends (**800**) a broadcast Ethernet message using its MAC address, chassis identifier and chassis position. The other switch blade receives this message and responds (**802**) with its information, including a network address. The passive chassis manager then begins sending (**804**) its status messages to the active chassis manager. The passive chassis manager also initiates (**806**) monitoring of the active chassis manager.

Another area in which high availability can be provided is in the upgrading of software of a blade. Each blade (whether a computing unit blade or a switch blade) maintains in nonvolatile memory a current, valid configuration table identifying the firmware, including a boot loader, an operating system, and applications to be loaded. A shadow copy of this table is maintained. Additionally, shadow copies of the firmware, operating system and applications are maintained.

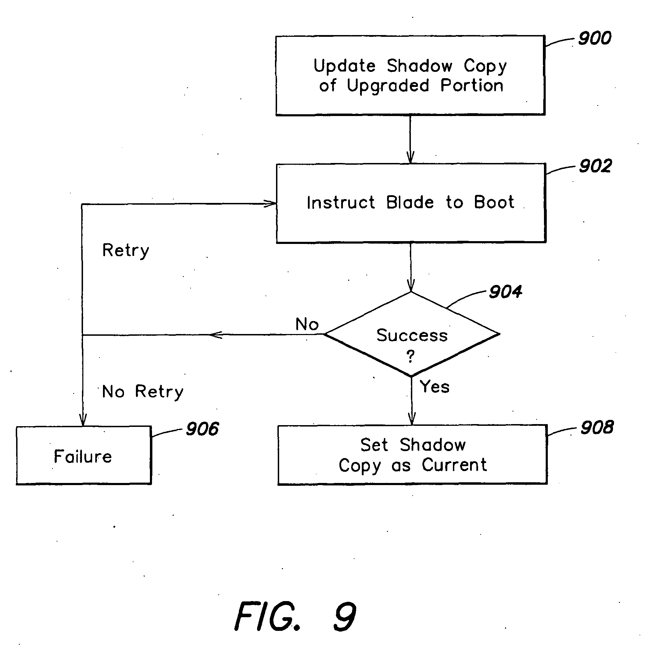

**Fig. 9** is a flow chart illustrating how software is upgraded in the system. Software upgrades may be provided to a blade over the network. When a software upgrade is performed, the shadow or secondary copies of the portion upgraded, e.g. firmware, operating system, and applications is updated **900.** The blade is instructed **902** to boot according to the configuration table in the shadow copy. If a failure occurs, then a reboot could be attempted **904** a number of times, such as two. If the software upgrade fails to boot properly, as indicated at **906,** then the blade reverts back to the current, valid configuration table. Otherwise, the shadow copy of the software becomes the current, valid configuration table as noted at **908.**

As these operations demonstrate, each blade server monitors its own blades to determine whether they are operational, to communicate status information and/or to initiate recovery operations. With status and configuration information available for each blade, and with the mapping of network addresses for each blade to its physical position (chassis identifier and slot identifier), this information may be presented in a graphical user interface. Such an interface may include a graphical representation of the blade servers which a user manipulates to view various information about each blade server and about each blade.

The foregoing system is particularly useful in implementing a highly available, blade based distributed, shared file system for supporting high bandwidth temporal media data, such as video and audio data, that is captured, edited and played back in an environment with a large number of users. Because the topology of the network can be derived from the network addresses, this information can be used to partition use of the blade servers to provide various performance enhancements. For example, high resolution material can be segregated from low resolution material based upon networking topology and networking bottlenecks, which in turn will segregate network traffic from different clients into different parts of the network. In such an application, data may be divided into segments and distributed among storage blades according to a non-uniform pattern within the set of storage blades designated for each type of content.

In such a system, it may be desirable to manage the quality of service between client applications and the blade servers. The switch in each blade server allocates sufficient bandwidth or buffering for a port for a client according to the bandwidth required by the client. The client may indicate its bandwidth or burstiness requirements to the storage system by informing the catalog manager. The catalog manager can inform the switches of the bandwidth or burstiness requirements of the different clients. A client may periodically update its bandwidth or burstiness requirements.

There has thus been disclosed: A blade-based distributed computing system, for applications such as a storage network system, is made highly-available. The blade server integrates several computing blades and a blade for a switch that connects to the computing blades. Redundant components permit failover of operations from one component to its redundant component. Configuration of one or more blade servers, such as assignment of high level network addresses to each blade, can be performed by a centralized process, called a configuration manager, on one blade in the system. High level network addresses can be assigned using a set of sequential network addresses for each blade server. A range of high level network addresses is assigned to each blade server. Each blade server in turn assigns high level network addresses to its blades. The high level network address for each blade can be mapped to its chassis identifier and slot identifier. Configuration information also may include software version information and software upgrades. By distributing configuration information among the various components of one or more blade servers, configuration information can be accessed by any component that acts as the configuration manager

## Claims

1. A blade-based distributed computing system (200), comprising:
a blade server (202) including a plurality of computing blades (206) and
one or more switch blades (210), wherein each computing blade includes a network interface (208) connected to the one or more switch blades;
**characterized in that** a switch blade is configured to:
assign a network address to each blade in the blade server; and
manage information mapping the network address assigned to each blade to a position of the blade within the blade server.

2. The blade-based distributed computing system of claim 1, wherein a switch blade includes a configuration manager for configuring each blade in the blade server.

3. The blade-based distributed computing system of claim 2, wherein the configuration manager establishes network addresses for each blade in the blade server.

4. The blade-based distributed computing system of claim 1, wherein the switch blade is configured to assign to each blade a high-level network address selected from a range of network addresses allocated to the blade server.

5. The blade-based distributed computing system of any preceding claim, wherein the switch blade is configured to assign a network address to each blade based on a slot identifier identifying the position of the blade in the blade server chassis.

6. The blade-based distributed computing system of claim 5, wherein the slot identifiers are based on signals hardwired for each slot in the chassis which are received by a blade when a blade is installed in the chassis.

7. The blade-based distributed computing system of claim 5 or 6, wherein the switch blade is configured to assign network addresses to the blades from a block of addresses allocated to the blade server sequentially according to each blade's slot identifier.

8. The blade-based distributed computing system of any preceding claim, wherein the mapping information comprises a table mapping a slot identifier for a blade to a network address assigned to the blade.

9. The blade-based distributed computing system of any preceding claim, wherein the blade server is associated with a chassis identifier identifying the blade server chassis, and wherein the mapping information comprises a table mapping the slot identifier and chassis identifier for a blade to a network address assigned to the blade.

10. The blade-based distributed computing system of claim 1, wherein the switch blade further manages information associating a chassis identifier identifying the blade server chassis and a chassis position identifying the position of the chassis relative to other chassis.

11. The blade-based distributed computing system of claim 1, further comprising a chassis manager for monitoring status of each blade in the blade server.

12. The blade-based distributed computing system of claim 1, wherein the chassis manager initiates a recovery operation for a blade that fails.

13. The blade-based distributed computing system of claim 12, further comprising means for providing a graphical user interface including a graphical representation of the blade server which a user manipulates to view various information about each blade.

14. The blade-based distributed computing system of claim 1, further comprising
a plurality of clients (104) connected to the blade server through a network (106) that connects to the one or more switch blades, and
wherein a switch blade includes means for allocating bandwidth for each client according to bandwidth requirements for the client.

15. The blade-based distributed computing system of claim 1, further comprising:
a second blade server including a second plurality of computing blades and a second set of one or more switch blades, wherein each computing blade includes a network interface connected to the one or more switch blades; and
a network (212) connecting the first set of one or more switch blades of the blade server to the second set of one or more switch blades of the second blade server;
wherein one of the switch blades from the first and second sets of one or more switch blades includes a configuration manager.

16. The blade-based distributed computing system of claim 15, wherein a switch blade selected from the first set of one or more switch blades of the blade server and the second set of one or more switch blades of the second blade server includes a configuration manager for configuring the first and second blade servers.

17. The blade-based distributed computing system of claim 16, wherein the configuration manager establishes a range of network addresses for each blade server.

18. The blade-based distributed computing system of claim 15, further comprising means for providing a graphical user interface including a graphical representation of the blade server and the second blade server which a user manipulates to view various information about each blade server and about each blade.

19. The blade-based distributed computing system of claim 15, further comprising means for distributing configuration information among the blades of the blade server and the second blade server.

20. A method of managing a blade-based distributed computing system (200) comprising a blade server (202) including a plurality of computing blades (206) and one or more switch blades (210) , wherein each computing blade includes a network interface (208) connected to the one or more switch blades, **characterized in that** the method comprises:
assigning, by a switch blade, a network address to each blade in the blade server; and
managing information mapping the network address assigned to each blade to a position of the blade within the blade server.

## Patentansprüche

1. Verteiltes Computersystem (200) auf Blade-Basis, das umfasst:
einen Blade-Server (202), der mehrere Rechen-Blades (206) und ein oder mehrere Switch-Blades (210) enthält, wobei jedes Rechen-Blade eine mit dem einen oder den mehreren Switch-Blades verbundene Netzschnittstelle (208) enthält;
**dadurch gekennzeichnet, dass** ein Switch-Blade konfiguriert ist, um:
jedem Blade in dem Blade-Server eine Netzadresse zuzuweisen; und
Informationen zu managen, die die jedem Blade zugewiesene Netzadresse auf eine Position des Blades in dem Blade-Server abbilden.

2. Verteiltes Computersystem auf Blade-Basis nach Anspruch 1, wobei ein Switch-Blade einen Konfigurationsmanager umfasst, um jedes Blade in dem Blade-Server zu konfigurieren.

3. Verteiltes Computersystem auf Blade-Basis nach Anspruch 2, wobei der Konfigurationsmanager Netzadressen für jedes Blade in dem Blade-Server erstellt.

4. Verteiltes Computersystem auf Blade-Basis nach Anspruch 1, wobei das Switch-Blade konfiguriert ist, um jedem Blade eine Netzadresse hoher Ebene zuzuweisen, die aus einem Bereich von Netzadressen ausgewählt ist, der dem Blade-Server zugeordnet ist.

5. Verteiltes Computersystem auf Blade-Basis nach einem vorhergehenden Anspruch, wobei das Switch-Blade konfiguriert ist, um jedem Blade auf der Grundlage eines Steckplatzidentifizierers, der die Position des Blades in dem Blade-Server-Chassis identifiziert, eine Netzadresse zuzuweisen.

6. Verteiltes Computersystem auf Blade-Basis nach Anspruch 5, wobei die Steckplatzidentifizierer auf Signalen basieren, die für jeden Steckplatz im Chassis fest verdrahtet sind und von einem Blade empfangen werden, wenn ein Blade in dem Chassis installiert ist.

7. Verteiltes Computersystem auf Blade-Basis nach Anspruch 5 oder 6, wobei das Switch-Blade konfiguriert ist, um den Blades aus einem Block von Adressen, der dem Blade-Server zugeordnet ist, sequentiell entsprechend dem Steckplatzidentifizierer jedes Blades Netzadressen zuzuweisen.

8. Verteiltes Computersystem auf Blade-Basis nach einem vorhergehenden Anspruch, wobei die Abbildungsinformationen eine Tabelle umfassen, die einen Steckplatzidentifizierer für ein Blade auf eine dem Blade zugewiesene Netzadresse abbildet.

9. Verteiltes Computersystem auf Blade-Basis nach einem vorhergehenden Anspruch, wobei der Blade-Server einem Chassis-Identifizierer zugeordnet ist, der das Blade-Server-Chassis identifiziert, und wobei die Abbildungsinformationen eine Tabelle umfassen, die den Steckplatzidentifizierer und den Chassis-Identifizierer für ein Blade auf eine dem Blade zugewiesene Netzadresse abbildet.

10. Verteiltes Computersystem auf Blade-Basis nach Anspruch 1, wobei das Switch-Blade ferner Informationen managt, die einen das Blade-Server-Chassis identifizierenden Chassis-Identifizierer und eine die Position des Chassis relativ zu anderen Chassis identifizierende Chassis-Position einander zuordnen.

11. Verteiltes Computersystem auf Blade-Basis nach Anspruch 1, das ferner einen Chassis-Manager umfasst, um den Status jedes Blades in dem Blade-Server zu überwachen.

12. Verteiltes Computersystem auf Blade-Basis nach Anspruch 1, wobei der Chassis-Manager eine Wiederherstellungsoperation für ein ausgefallenes Blade initiiert.

13. Verteiltes Computersystem auf Blade-Basis nach Anspruch 12, das ferner Mittel umfasst, um eine graphische Anwenderschnittstelle zu schaffen, die eine graphische Darstellung des Blade-Servers aufweist, die ein Anwender manipuliert, um verschiedene Informationen über jedes Blade zu betrachten.

14. Verteiltes Computersystem auf Blade-Basis nach Anspruch 1, das ferner umfasst:
mehrere Clients (104), die mit dem Blade-Server über ein Netz (106) verbunden sind, das mit dem einen oder den mehreren Switch-Blades verbunden ist, und
wobei ein Switch-Blade Mittel enthält, um jedem Client in Übereinstimmung mit Bandbreitenanforderungen jedes Clients Bandbreite zuzuweisen.

15. Verteiltes Computersystem auf Blade-Basis nach Anspruch 1, das ferner umfasst:
einen zweiten Blade-Server, der eine zweite Mehrzahl von Rechen-Blades und eine zweite Menge aus einem oder mehreren Switch-Blades enthält, wobei jedes Rechen-Blade eine mit dem einen oder den mehreren Switch-Blades verbundene Netzschnittstelle enthält; und
ein Netz (212), das die erste Menge aus einem oder mehreren Switch-Blades des Blade-Servers mit der zweiten Menge aus einem oder mehreren Switch-Blades des zweiten Blade-Servers verbindet;
wobei eines der Switch-Blades der ersten und der zweiten Menge aus einem oder mehreren Switch-Blades einen Konfigurationsmanager enthält.

16. Verteiltes Computersystem auf Blade-Basis nach Anspruch 15, wobei ein aus der ersten Menge aus einem oder mehreren Switch-Blades des Blade-Servers und aus der zweiten Menge aus einem oder mehreren Switch-Blades des zweiten Blade-Servers ausgewähltes Switch-Blade einen Konfigurationsmanager enthält, um den ersten und den zweiten Blade-Server zu konfigurieren.

17. Verteiltes Computersystem auf Blade-Basis nach Anspruch 16, wobei der Konfigurationsmanager einen Bereich von Netzadressen für jeden Blade-Server erstellt.

18. Verteiltes Computersystem auf Blade-Basis nach Anspruch 15, das ferner Mittel umfasst, um eine graphische Anwenderschnittstelle zu schaffen, die eine graphische Darstellung des Blade-Servers und des zweiten Blade-Servers aufweist, die ein Anwender manipuliert, um verschiedene Informationen über jeden Blade-Server und über jedes Blade zu betrachten.

19. Verteiltes Computersystem auf Blade-Basis nach Anspruch 15, das Mittel umfasst, um Konfigurationsinformationen auf die Blades des Blade-Servers und des zweiten Blade-Servers zu verteilen.

20. Verfahren für das Management eines verteilten Computersystems (200) auf Blade-Basis, das einen Blade-Server (202) umfasst, der mehrere Rechen-Blades (206) und ein oder mehrere Switch-Blades (210) enthält, wobei jedes Rechen-Blade eine Netzschnittstelle (208) enthält, die mit dem einen oder den mehreren Switch-Blades verbunden ist, **dadurch gekennzeichnet, dass** das Verfahren umfasst:
Zuweisen einer Netzadresse zu jedem Blade in dem Blade-Server mittels eines Switch-Blades; und
Managen von Informationen, die die jedem Blade zugewiesene Netzadresse auf eine Position des Blades in dem Blade-Server abbilden.

## Revendications

1. Système informatique distribué à base de lames (200), comprenant :
un serveur lame (202) comprenant une pluralité de lames informatiques (206) et une ou plusieurs lames de commutateur (210), dans lequel chaque lame informatique comprend une interface réseau (208) raccordée aux une ou plusieurs lames de commutateur ;
**caractérisé en ce qu'**une lame de commutateur est configurée pour :
attribuer une adresse réseau à chaque lame dans le serveur lame ; et
gérer l'information cartographiant l'adresse réseau attribuée à chaque lame sur une position de la lame dans le serveur lame.

2. Système informatique distribué à base de lames selon la revendication 1, dans lequel une lame de commutateur comprend un gestionnaire de configuration pour configurer chaque lame dans le serveur lame.

3. Système informatique distribué à base de lames selon la revendication 2, dans lequel le gestionnaire de configuration établit des adresses réseau pour chaque lame dans le serveur lame.

4. Système informatique distribué à base de lames selon la revendication 1, dans lequel la lame de commutateur est configurée pour attribuer à chaque lame une adresse réseau de haut niveau sélectionnée dans une plage d'adresses réseau allouée au serveur lame.

5. Système informatique distribué à base de lames selon l'une quelconque des revendications précédentes, dans lequel la lame de commutateur est configurée pour attribuer une adresse réseau à chaque lame en fonction d'un dispositif d'identification de fente identifiant la position de la lame dans le châssis du serveur lame.

6. Système informatique distribué à base de lames selon la revendication 5, dans lequel les dispositifs d'identification de fente sont basés sur des signaux câblés pour chaque fente dans le châssis qui sont reçus par une lame lorsqu'une lame est installée dans le châssis.

7. Système informatique distribué à base de lames selon la revendication 5 ou 6, dans lequel la lame de commutateur est configurée pour attribuer des adresses réseau aux lames à partir d'un bloc d'adresses alloué au serveur lame de manière séquentielle selon le dispositif d'identification de fente de chaque lame.

8. Système informatique distribué à base de lames selon l'une quelconque des revendications précédentes, dans lequel l'information de cartographie comprend un tableau cartographiant un dispositif d'identification de fente pour une lame sur une adresse réseau attribuée à la lame.

9. Système informatique distribué à base de lames selon l'une quelconque des revendications précédentes, dans lequel le serveur lame est associé à un dispositif d'identification de châssis identifiant le châssis du serveur lame et dans lequel l'information de cartographie comprend un tableau cartographiant le dispositif d'identification de fente et le dispositif d'identification de châssis pour une lame pour une adresse réseau attribuée à la lame.

10. Système informatique distribué à base de lames selon la revendication 1, dans lequel la lame de commutateur gère en outre l'information associant un dispositif d'identification de châssis identifiant le châssis du serveur lame et une position de châssis identifiant la position du châssis par rapport à l'autre châssis.

11. Système informatique distribué à base de lames selon la revendication 1, comprenant en outre un gestionnaire de châssis pour surveiller le statut de chaque lame dans le serveur lame.

12. Système informatique distribué à base de lames selon la revendication 1, dans lequel le gestionnaire de châssis initie une opération de récupération pour une lame qui présente une défaillance.

13. Système informatique distribué à base de lames selon la revendication 12, comprenant en outre des moyens pour fournir une interface utilisateur graphique comprenant une représentation graphique du serveur lame qu'un utilisateur manipule pour voir différentes informations concernant chaque lame.

14. Système informatique distribué à base de lames selon la revendication 1, comprenant en outre :
une pluralité de clients (104) raccordés au serveur lame par le biais d'un réseau (106) qui raccorde les une ou plusieurs lames de commutateur, et
dans lequel une lame de commutateur comprend des moyens pour attribuer une largeur de bande pour chaque client selon les exigences de largeur de bande pour le client.

15. Système informatique distribué à base de lames selon la revendication 1, comprenant en outre :
un second serveur lame comprenant une seconde pluralité de lames informatiques et un second ensemble de une ou plusieurs lames de commutateur, dans lequel chaque lame informatique comprend une interface réseau raccordée aux une ou plusieurs lames de commutateur ; et
un réseau (212) raccordant le premier ensemble de une ou plusieurs lames de commutateur du serveur lame à un second ensemble de une ou plusieurs lames de commutateur du second serveur lame ;
dans lequel l'une des lames de commutateur provenant des premier et second ensembles de une ou plusieurs lames de commutateur comprend un gestionnaire de configuration.

16. Système informatique distribué à base de lames selon la revendication 15, dans lequel une lame de commutateur choisie dans le premier ensemble de une ou plusieurs lames de commutateur du serveur lame et le second ensemble de une ou plusieurs lames de commutateur du second serveur lame comprend un gestionnaire de configuration pour configurer les premier et second serveurs lame.

17. Système informatique distribué à base de lames selon la revendication 16, dans lequel le gestionnaire de configuration établit une plage d'adresses réseau pour chaque serveur lame.

18. Système informatique distribué à base de lames selon la revendication 15, comprenant en outre des moyens pour fournir une interface utilisateur graphique comprenant une représentation graphique du serveur lame et du second serveur lame qu'un utilisateur manipule pour voir les différentes informations concernant chaque serveur lame et concernant chaque lame.

19. Système informatique distribué à base de lames selon la revendication 15, comprenant en outre des moyens pour distribuer l'information de configuration parmi les lames du serveur lame et du second serveur lame.

20. Procédé pour gérer un système informatique distribué à base de lames (200) comprenant un serveur lame (202) comprenant une pluralité de lames informatiques (206) et une ou plusieurs lames de commutateur (210), dans lequel chaque lame informatique comprend une interface réseau (208) raccordée aux une ou plusieurs lames de commutateur, **caractérisé en ce que** le procédé comprend les étapes consistant à :
attribuer, par une lame de commutateur, une adresse réseau à chaque lame dans le serveur lame ; et
gérer l'information cartographiant l'adresse réseau attribuée à chaque lame pour une position de la lame à l'intérieur du serveur lame.
